# EUROPEAN PATENT APPLICATION

(11) **EP 2 068 174 A2**
(43) Date of publication of application: **10.06.2009**
(21) Application number: 08021153.5
(22) Date of filing: 05.12.2008
(51) Int. Cl.: G01S 15/89, G01S 7/52

(54) **Ultrasound system and method of forming an ultrasound image**

(30) Priority: 05.12.2007 KR 20070125376; 11.08.2008 KR 20080078392
(71) Applicant: MEDISON CO., LTD., Kangwon-do 250-870 (KR)
(72) Inventor: Ahn, Chi Young, Gangnam-gu Seoul 135-280 (KR); Hyun, Dong Gyu, Gangnam-gu Seoul 135-280 (KR)
(74) Representative: Schmid, Wolfgang

(57) **Abstract**

The present invention relates to an ultrasound system. The ultrasound system includes an image processing unit for forming at least one 3-dimensional ultrasound image based on ultrasound echoes reflected from a target object; an input unit for receiving a setup instruction; and a control unit for outputting a first control signal for setting at least one predefined sample volume on the 3-dimensional ultrasound image in response to the setup instruction. The image processing unit is further configured to form at least one spectral Doppler image corresponding to the sample volume in response to the first control signal.

## Description

The present application claims priority from Korean Patent Application Nos. 10-2007-0125376 and 10-2008-0078392 filed on December 5, 2007 and August 11, 2008, respectively, the entire subject matters of which are incorporated herein by reference.

### BACKGROUND OF THE INVENTION

### [Technical Field]

The present invention generally relates to ultrasound systems, and more particularly to an ultrasound system and a method of forming an ultrasound image.

### [Background Art]

An ultrasound system has become an important and popular diagnostic tool since it has a wide range of applications. Specifically, due to its non-invasive and nondestructive nature, the ultrasound has been extensively used in the medical profession. Modem high-performance ultrasound diagnostic systems and techniques are commonly used to produce two or three-dimensional diagnostic images of internal features of an object (e.g., human organs).

The ultrasound system may provide a Doppler mode (D mode) for indicating a motion velocity of a moving object such as red blood cells in a blood vessel, cardiac valves and the like as a spectral Doppler image by using a Doppler shift. In order to provide the spectral Doppler image, a sample volume needs to be previously set on a brightness mode (B mode) image and Doppler signals corresponding to the sample volume are then obtained. The ultrasound system may form and output the Doppler spectral image based on the Doppler signals.

However, since the B-mode image is a 2-dimensional image of a grey scale, it may be difficult for the user to set the sample volume on a desirable vessel or a cardiac valve on the B-mode image. Thus, an accurate spectral Doppler image may not be provided.

### BRIEF DESCRIPTION OF THE DRAWINGS

FIG. 1 is a block diagram showing an illustrative embodiment of an ultrasound system.

FIG. 2 is a timing diagram showing transmission and reception of first and second ultrasound beams.

FIG. 3 is a schematic diagram showing an example of displaying a 3-dimensional ultrasound image, sample volumes and 3-dimensional coordinates.

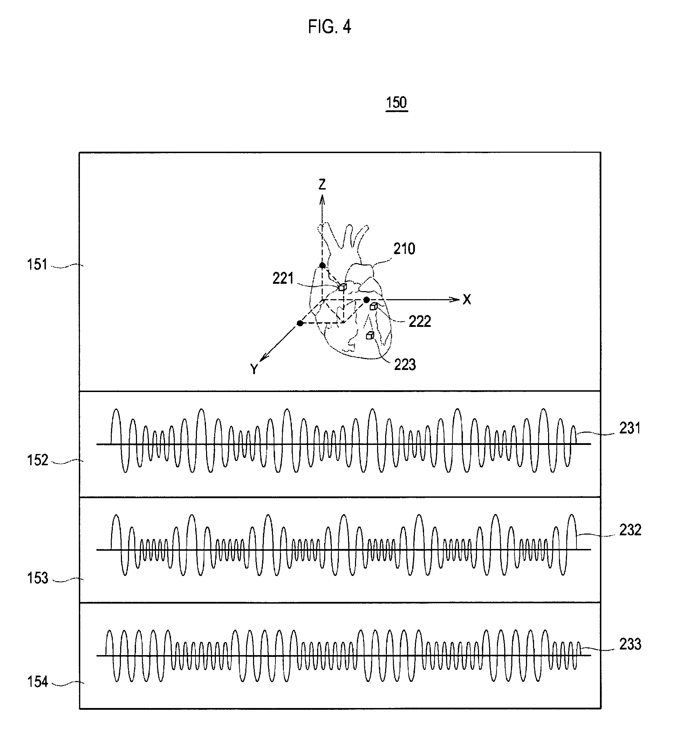

FIGS. 4 to 6 are schematic diagrams showing examples of displaying a 3-dimensional ultrasound image together with spectral Doppler images.

### DETAILED DESCRIPTION OF THE INVENTION

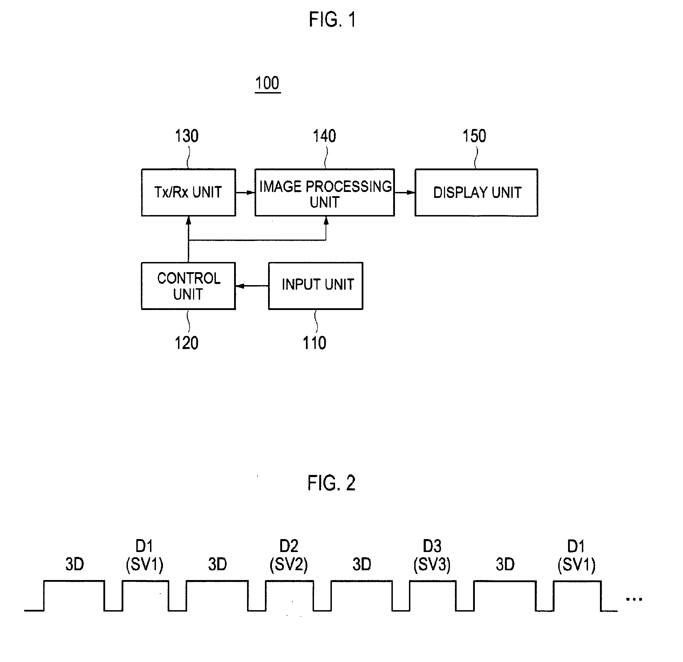

FIG. 1 is a block diagram illustrating one embodiment of an ultrasound system. Referring to FIG. 1, the ultrasound system 100 may include an input unit 110 for receiving user instructions. The user instructions may include a setup instruction for setting the number, size and position of sample volumes, a selection instruction for selecting at least one of the sample volumes, and a moving instruction for moving the sample volume. The sample volume may be formed to have a 3-dimensional figure such as a predefined hexahedron, sphere or the like.

The ultrasound system 100 may further include a control unit 120, which may be configured to control the transmission/reception of an ultrasound beam according to image modes of the ultrasound system 100. In a 3-dimensional image mode of the ultrasound system 100, the control unit 120 may generate a first control signal for controlling the transmission of a first ultrasound beam for forming a 3-dimensional ultrasound image of a target object. Also, the control unit may be configured to generate a second control signal. The second control signal may be used to control the transmission of a second ultrasound beam for forming a spectral Doppler image corresponding to a sample volume, which is set on the 3-dimensional ultrasound image of the target object, based on the setup instruction and the moving instruction. The control unit 120 may be configured to repeatedly generate the first and second control signals such that the first ultrasound beam 3D and the second ultrasound beams D1, D2 and D3 for obtaining spectral Doppler signals from the sample volumes SV1, SV2 and SV3 are repeatedly performed, as illustrated in FIG. 2. In such a case, the control unit 120 may control the second ultrasound beams D1, D2 and D3 to be alternately transmitted.

The control unit 120 may be further configured to generate a third control signal for controlling providing 3-dimensional coordinate information of the selected sample volume selected in response to the selection instruction. Also, the control unit 120 may generate a fourth control signal for controlling moving the selected sample volume in response to the moving instruction.

The ultrasound system may include a transmission/reception unit 130 configured to transmit the ultrasound beam to a target object under the control of the control unit 120. The transmission/reception unit 130 may include a probe (not shown) for generating ultrasound signals in response to electrical pulse signals and vice-versa. The probe may be one of a mechanical 3-dimensional probe, a 2-dimensional array probe, a matrix array probe and the like. The transmission/reception unit 130 may transmit the first ultrasound beam to the target object in response to the first control signal and convert ultrasound echoes reflected from the target object into electrical receive signals (hereinafter referred to as "first receive signals"). The transmission/reception unit 130 may transmit the second ultrasound beam to the target object in response to the second control signal and convert the ultrasound echoes reflected from the target object into electrical receive signals (hereinafter referred to as "second receive signals").

In connection with the transmission/reception unit 130, an image processing unit 140 may be configured to form a 3-dimensional image based on the first receive signals and a Spectral Doppler image based on the second receive signals. Also, the image processing unit 140 may provide the 3-dimensional coordinate information of the selected sample volume in response to the third control signals outputted from the control unit 120. In one embodiment, the image processing unit 140 may set 3-dimensional (XYZ) coordinates on a screen, on which the 3-dimensional ultrasound image is displayed, in response to the third control signals. The image processing unit 140 may be configured to display 3-dimensional coordinate information regarding a position of the corresponding sample volume on the 3-dimensional coordinates. In one embodiment, the 3-dimensional ultrasound image, which is used to set the 3-dimensional coordinates, may be a 3-dimensional static image or a real-time 3-dimensional moving image. The transmission/reception unit 130 may transmit a diffraction limited beam as the ultrasound transmit beam for forming the real-time 3-dimensional moving image, thereby forming the first receive signals.

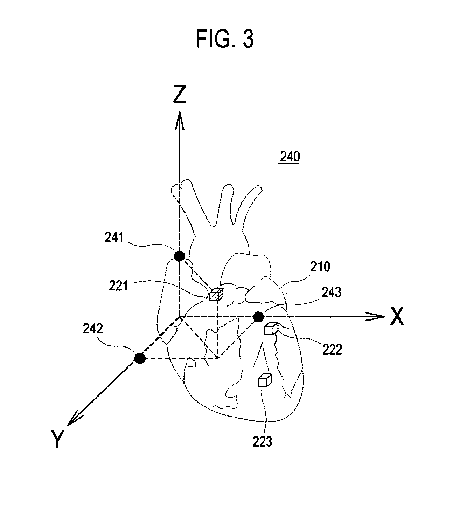

For example, the image processing unit 140 may set 3-dimensional coordinates 240 on a 3-dimensional ultrasound image 210 as illustrated in FIG. 3. The image processing unit 140 may display 3-dimensional coordinate information 241, 242 and 243 of a sample volume 221 selected from three sample volumes 221, 222 and 223, which are set on the 3-dimensional ultrasound image, on the 3-dimensional coordinates 240 with texts and the like in response to the third control signals. Although it has been described that the image processing unit 140 may display the 3-dimensional coordinate information of the sample volume on the 3-dimensional coordinates in one embodiment, it is certainly not limited thereto. In another embodiment, the image processing unit 140 may display the 3-dimensional coordinate information of the sample volume as a numerical value. The image processing unit 140 may be configured to effect a movement of the sample volume in response to the fourth control signals, followed by displaying 3-dimensional coordinate information of the moved sample volume.

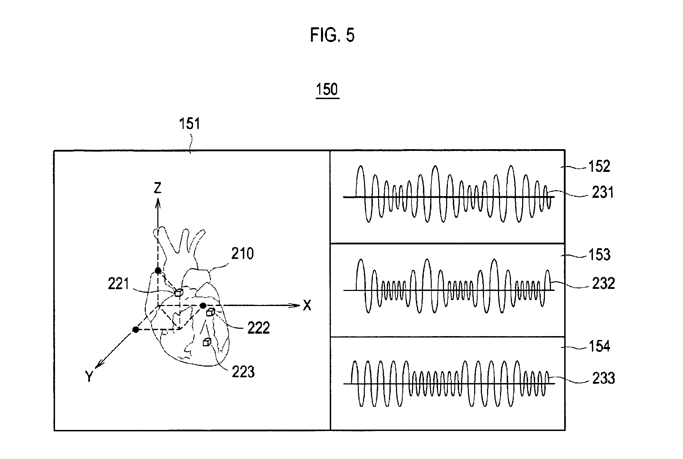

A display unit 150 may be configured to display the 3-dimensional ultrasound image and the spectral Doppler image, which are processed by the image processing unit 140. In one embodiment, the display unit 150 may display the 3-dimensional ultrasound image on a first display region 151 assigned at a left side of the screen 151, as illustrated in FIG. 5. Further, the display unit 150 may display first, second and third spectral Doppler images 231, 232 and 233 corresponding to the sample volumes 221, 222 and 223 on second display regions 152, 153 and 154 assigned at a right side of the screen 151.

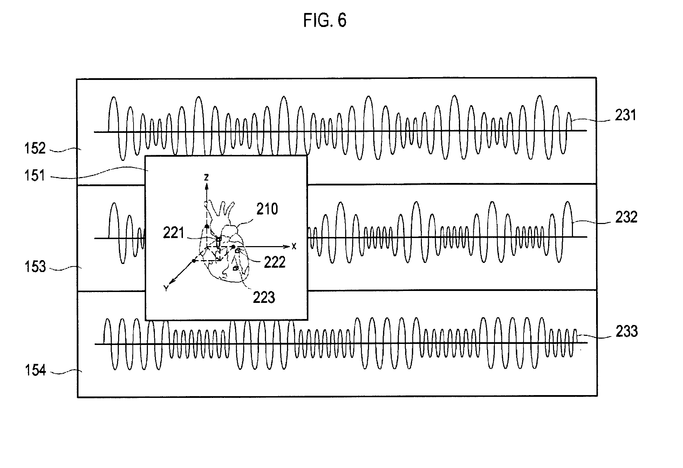

In another embodiment, the display unit 150 may display the first to third spectral Doppler images 231, 232 and 233 corresponding to the first to third sample volumes 221, 222 and 223 on first display regions 152, 153 and 154 assigned to the entire screen, as illustrated in FIG. 6. The display unit 150 may display the 3-dimensional ultrasound image on a second display region 151 assigned at an arbitrary position on the first display regions. In such a case, the ultrasound system 100 may be controlled such that the 3-dimensional ultrasound image is always displayed over the first to third spectral Doppler images 231, 232 and 233. The number of the first display regions may be determined depending on the number of the sample volumes set in the 3-dimensional image.

As mentioned above, at least one sample volume having a 3-dimensional figure may be set on the 3-dimensional ultrasound image and the 3-dimensional coordinate information of the sample volume may be provided. Thus, it may allow the user to move the sample volume to a desirable position.

In accordance with one embodiment of the present invention, there is provided an ultrasound system, comprising: an image processing unit configured to form at least one 3-dimensional ultrasound image based on ultrasound echoes reflected from a target object; an input unit configured to receive a setup instruction; and a control unit configured to output a first control signal for setting at least one predefined sample volume on the 3-dimensional ultrasound image in response to the setup instruction, wherein the image processing unit is further configured to form at least one spectral Doppler image corresponding to the sample volume in response to the first control signal.

In accordance with another embodiment of the present invention, there is provided a method of forming an ultrasound image, comprising: transmitting a first ultrasound beam to a target object and receiving ultrasound echoes reflected from the target object to thereby generate first receive signals; forming a 3-dimensional ultrasound image based on the first receive signals; receiving a setup instruction; setting at least one predetermined sample volume on the 3-dimensional ultrasound image in response to the setup instruction; transmitting a second ultrasound beam to a target object and receiving the ultrasound echoes reflected from the target object to thereby generate second receive signals; and forming a spectral Doppler image based on the second receive signals.

Any reference in this specification to "one embodiment," "an embodiment," "example embodiment," etc. means that a particular feature, structure or characteristic described in connection with the embodiment is included in at least one embodiment of the present invention. The appearances of such phrases in various places in the specification are not necessarily all referring to the same embodiment. Further, when a particular feature, structure or characteristic is described in connection with any embodiment, it is submitted that it is within the purview of one skilled in the art to effect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An ultrasound system, comprising:
an image processing unit for forming at least one 3-dimensional ultrasound image based on ultrasound echoes reflected from a target object;
an input unit for receiving a setup instruction; and
a control unit for outputting a first control signal for setting at least one predefined sample volume on the 3-dimensional ultrasound image in response to the setup instruction,
wherein the image processing unit forms at least one spectral Doppler image corresponding to the sample volume in response to the first control signal.

2. The ultrasound system of Claim 1, wherein the sample volume is formed with a 3-dimensional figure.

3. The ultrasound system of Claim 2, wherein the image processing unit is configured to set 3-dimensional coordinates for providing 3-dimensional information regarding the sample volume on the 3-dimensional image.

4. The ultrasound system of Claim 3, wherein the input unit is configured to receive a selection instruction for selecting the sample volume and a moving instruction for moving the selected sample volume on the 3-dimensional ultrasound image.

5. The ultrasound system of Claim 4, wherein the control unit is configured to output a second control signal for providing the 3-dimensional coordinate information of the sample volume by the image processing unit in response to the selection instruction, and wherein the control unit is further configured to output a third control signal for moving the sample volume in response to the moving instruction.

6. The ultrasound system of Claim 5, further comprising a transmission and reception unit configured to transmit an ultrasound beam to the target object to thereby obtain the ultrasound echoes, wherein the transmission and reception unit includes a 3-dimensional probe.

7. The ultrasound system of Claim 6, wherein the 3-dimensional probe is any one of a mechanical 3-dimensional probe, a 2-dimensional array probe and a matrix array probe.

8. The ultrasound system of Claim 7, wherein the 3-dimensional image is any one of a static image and a real-time moving image.

9. The ultrasound system of Claim 8, wherein the control unit is configured to output a fourth control signal for transmitting a limited refraction beam as the ultrasound beam by the transmission and reception unit for obtaining the real-time moving image.

10. A method of forming an ultrasound image, comprising:
transmitting a first ultrasound beam to a target object and receiving ultrasound echoes reflected from the target object to thereby generate first receive signals;
forming a 3-dimensional ultrasound image based on the first receive signals;
receiving a setup instruction;
setting at least one predetermined sample volume on the 3-dimensional ultrasound image in response to the setup instruction;
transmitting a second ultrasound beam to a target object and receiving ultrasound echoes reflected from the target object to thereby generate second receive signals; and
forming a spectral Doppler image based on the second receive signals.

11. The method of Claim 10, wherein the sample volume is formed with a 3-dimensional figure.

12. The method of Claim 11, further comprising setting 3-dimensional coordinates for providing 3-dimensional coordinate information of the sample volume on the 3-dimensional ultrasound image.

13. The method of Claim 12, further comprising:
receiving a selection instruction for selecting the sample volume; and
receiving a moving instruction for moving the selected sample volume.

14. The method of Claim 13, further comprising:
providing the 3-dimensional coordinate information of the sample volume in response to the selection instruction; and
moving the sample volume on the 3-dimensional ultrasound image in response to the moving instruction.
